(19) Europäisches Patentamt
European Patent Office
Office européen des brevets

(11) Publication number: **0 248 790 B1**

# EUROPEAN PATENT SPECIFICATION
## published in accordance with Art. 158(3) EPC

(45) Date of publication of patent specification: 24.04.91

(51) Int. Cl.⁵: **B29C 39/26**, B29C 39/36, B29C 45/26, B29C 45/23

(21) Application number: 85906136.8

(22) Date of filing: 27.11.85

(86) International application number: PCT/US85/02331

(87) International publication number: WO 87/03242 (04.06.87 87/12)

(54) STACK MOLD.

(43) Date of publication of application: 16.12.87 Bulletin 87/51

(45) Publication of the grant of the patent: 24.04.91 Bulletin 91/17

(84) Designated Contracting States: AT BE CH DE FR GB IT LI LU NL SE

(56) References cited:
DE-A- 2 128 343   US-A- 653 235
US-A- 3 004 291   US-A- 3 128 499
US-A- 3 357 058   US-A- 3 467 990
US-A- 3 497 900   US-A- 3 551 936
US-A- 3 838 960   US-A- 3 996 330
US-A- 4 438 065

(73) Proprietor: AMERICAN MOLD COMPANY, INC.
2200 N.W. 32nd Street Suite 100
Pompano Beach, FL 33069(US)

(72) Inventor: DE LAROSIERE, Pierre, J.
Duque de Palmela, 30 - 4C
P-1200 Lisboa(PT)

(74) Representative: Lips, Hendrik Jan George, Ir. et al
HAAGSCH OCTROOIBUREAU Breitnerlaan 146
NL-2596 HG Den Haag(NL)

## Description

Technical Field:

This invention relates to a stack mold, comprising:
a pair of mold halves arranged to move toward and away from one another along an axis of movement between platens of a press;
a plurality of mold plates arranged in a stack between the mold halves, said mold plates being disposed in planes substantially parallel to the axis of movement of said mold halves;
and
said mold plates and mold halves having shaped surfaces formed thereon such that a wedging action is exerted on the mold plates as the mold halves close toward one another, thereby pressing the mold plates together;
said mold plates having hangers formed integrally on upper extremities thereof for supporting and guiding the mold plates on the mold halves as the mold halves move toward and away from one another (DE-A-2 128 343).

Background Art:

Injection molding has heretofore been based upon the theory that the part to be molded should be placed in the mold such that the main molding surfaces are in planes parallel to the platens of the press. This has been due to the belief that the clamping force of the press should be utilized to close the mold in the same plane or direction as the closing direction of the press. As a result, the area available for molding is limited to the area of the platens existing between the columns of the press.

An improvement over this limitation was accomplished with stack molds, in which two or more pairs or layers of mold plates are placed between the platens generally parallel thereto. While this arrangement increases the molding capacity of the presses, especially for flat parts, it is still restricted since injection devices must be used which penetrate the part being molded in order to reach all of the cavities to be filled. This eliminates use of such stack molds for a large number of parts that do not have openings permitting such penetration. Further, such systems require that the injection device be withdrawn to permit removal of the part. Moreover, there is a limit to the distance the molten material can be conveyed away from the nozzle of the press and still permit a thermally balanced distribution of the plastic into each cavity level. As a result of these limitations, very few stack molds have been successfully built with more than two levels of injection.

Prior art molds are further limited in their capacity because of the requirement for observing a limiting ratio between the surface of the part to be molded and the clamping force of the press. The projected surface of the part dictates the force required to keep the mold closed during the injection, regardless of how thin or lightweight the part may be.

Up to now, basically flat, thin wall and relatively lightweight parts such as discs, lids, trays, partitions, hangers, plates, cutlery, frames, etc., have been produced in small quantities compared to the injection capacity of the press utilized. This normally results in a high production costs and has therefore made injection molding an expensive process for a large number of parts which should otherwise be economical to manufacture. There is thus a need for molds capable of producing as great a number of parts as the injection press has the capacity to produce.

United States patents 653,235 to GRAY, 4,025,268 to TAYLOR, 4,345,965 to LINDENMAYER, et al, 4,472,127 to CYRIAX et al, and 3,357,058 to KUTIK are all exemplary of prior art devices.

The patent to GRAY discloses a wax mold in which the mold plates are arranged in planes perpendicular to the axis or direction of movement of the press. This patent does disclose a hanger system for the mold plates, although this hanger system does not provide a mold plate opening force as is done in the guide system of the present invention.

The patent to CYRIAX et al merely relates to an apparatus for rapidly changing molds (not individual inserts) in an injection molding press, wherein the mold is supported and moved laterally into and out of the press by power means.

The patent to TAYLOR discloses a mold for compression molding (not injection) in which a series of plates are arranged with their planes perpendicular to the axis of movement of the press and in which the mold plates are clamped closed by power means independent of the press operation.

The patent to LINDENMAYER relates to a mold (not an injection mold) which permits the production of complementary but different parts. The mold plates are arranged perpendicular to the axis of movement of the press.

The patent to KUTIK shows a mold for producing a bristled product, such as a brush. In the structure described in this patent, the mold plates 57 and 58 are arranged parallel to the platens of the press - a conventional arrangement. The laminated structure 95 merely comprises an insert carried by the mold for producing the bristles as the mold plates 57 and 58 move toward and away from one another.

An injection mold in which a plurality of mold plates is arranged substantially perpendicular to the planes of the press platens, is known from DE-A-2,128,343 (Maschinenfabrik Köppern & Co. KG.). Said German patent application discloses a stack mold substantially as defined in the preambulatory paragraph (technical field) of this specification. According to said known embodiment the mold plates are supported in one of the mold halves 26, said mold plates provided with outward tapered or trapped end portions engaged within a recess 24 of said mold half 26. To ensure that the mold plates are pressed together,the outer mold plates are provided on their outer sides with tapered faces cooperating with tapered faces on surrounding form pieces 4 surrounding the mold plates and inserted along the mold plates in the mold halves with tapered ends. Thus the mold plates can properly be pressed together when the press platens are moved to each other. Another advantage is that due to the arrangement of mold plates perpendicular to the press platens the injection in the mold cavities can be arranged for through one of the mold halves so that the injection system does not need to have to be removed when the mold plates have to be separated from each other at the end of the molding process.

Though the stack mold according to DE-A-2,128,343 is certainly an improvement over prior art stack mold having mold plates parallel to the press platens because of its injection system, there are also drawbacks in its versatility. For instance it is not possible to remove mold plates individually from the mold without requiring disassembling to the mold halves. Another thing is that the ejection system consisting of springs between the mold plates, could fail too easily.

Disclosure of the invention:

To overcome such and further drawbacks of the prior art the present invention provides a stack mold as defined in the preambulatory paragraph of this specification, characterized in that said mold halves having guide means formed thereon for cooperation with the hangers on the mold plates to cause the mold plates to separate from one another as the mold halves move away from one another during opening movement of the press, and said mold plates being individually removable from the mold without requiring disassembly of the mold halves.

Further aspects and advantages of the invention are defined in the dependent sub-claims 2-6.

According to the invention a plurality of mold plates is arranged parallel to one another and to the axis of movement of the mold halves and perpendicular to the planes of the press platens. The mold plates are formed with hangers which support the mold plates on slide bars resting on top of program plates, and the program plates have guide surfaces thereon whichdetermine the opening and closing movements of the mold plates as the mold halves open and close. The endmost mold plates are wedge shaped so that the mold plates "home" into their exact location as the mold halves close. Since there is nothing to interfere with them, ejectors may be provided at any suitable point of the part and on both sides if desired. The ejectors are operated by compressed air and vacuum, and are controlled via a venturi which enables the operator to program each level of ejectors individually as required for each part. Also, the ejectors may be caused to pulsate and may be operated in any desired sequence by alternating compression and vacuum through the venturi. An air jet is positioned to direct a fan of air into the space between mold plates, slicing or stripping the part away at the end of a molding cycle and accelerating its fall away from the mold plates. Further, channels are engraved in the back of each plate, providing a large surface area permitting fast and optimal temperature exchange at the points and times needed. Adjustable channels are provided to control the temperature at individual sectors of the plates. Venting of the mold is accomplished via the channels serving the ejector system, in which the vacuum applied to the ejectors during an injection cycle is communicated to the mold cavity to vent it.

Brief Description of the Drawings:

These and other objects and advantages of the invention will become apparent from the following detailed description and accompanying drawings, in which like reference characters designate like parts throughout the several views, and wherein:

Figure 1 is an exploded perspective view of a mold in accordance with the invention, with parts shown in section;

Figure 2 is a perspective view of the mold of figure 1, showing the mold halves moved together;

Figure 3 is a schematic top view of the mold of the invention, showing the wear plates at the right hand side and the tongue and groove arrangement at the left hand side;

Figure 4 is an enlarged, fragmentary sectional view of a part of the ejector system of the invention;

Figure 5 is a view in section taken along line 5-5 in figure 4;

Figure 6 is a perspective view of the air jet tube for introducing a fan shaped air blast into the mold cavity at the end of an injection cycle;

Figure 7 is a somewhat schematic view of several mold plates, shown separated, and the air jet tube associated therewith;

Figure 8 is a top plan view of one mold half, showing the program plate on top thereof, with a slide bar and one pair of mold plates supported thereby; and

Figure 9 is an enlarged view in section, taken along line 9-9 in figure 8.

Best Mode For Carrying Out the Invention:

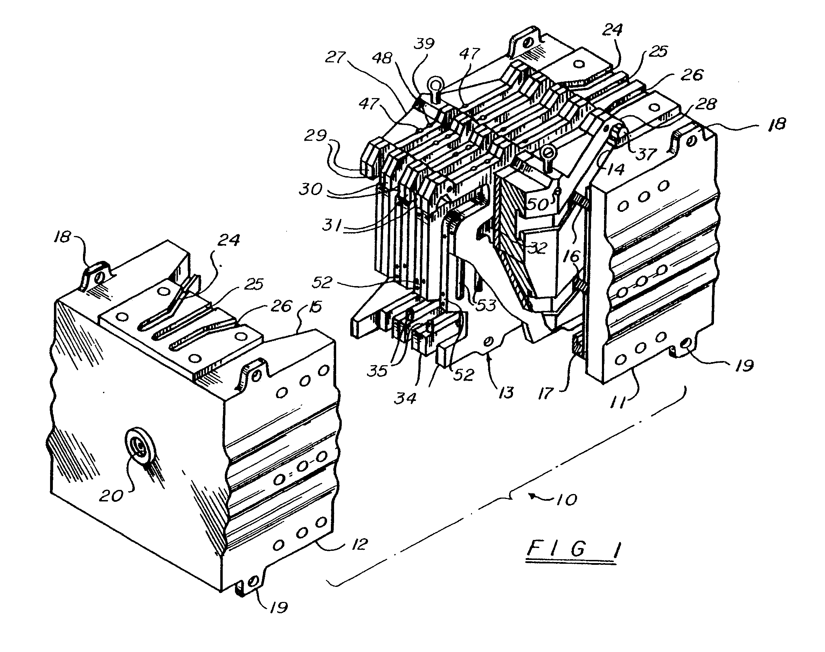

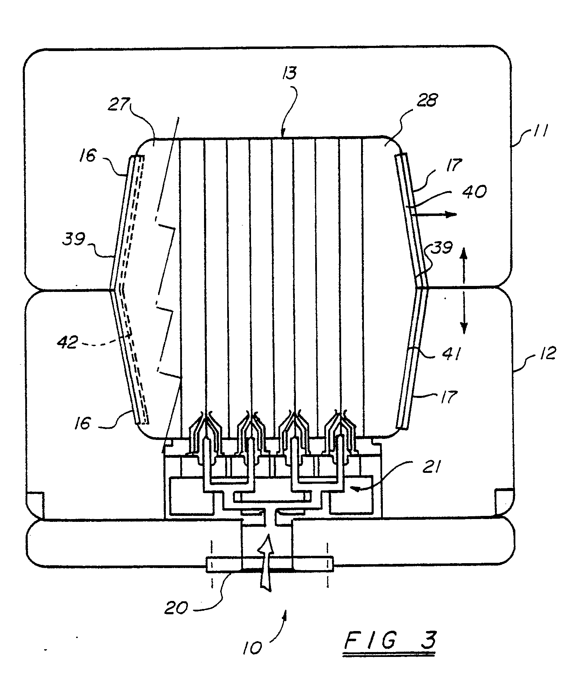

Referring more particularly to the drawings, a mold in accordance with the invention is shown generally at 10 in figures 1 through 3 and comprises mold halves (bolsters) 11 and 12 adapted to move toward and away from one another along an axis of movement indicated by arrow A, and recessed at their facing surfaces for receiving a plurality or stack of mold plates 13 arranged parallel to one another and parallel to the axis of movement of the mold halves.

The inner surfaces 14 and 15 of each mold half are tapered or wedge-shaped, opening toward the opposite mold half, and have a plurality of tongue members 16 thereon. Wear plates 17 are secured on the tapered surfaces. Combination eyebolt/feet members 18/19 are formed on each mold half, and an inlet 20 for the plastic material is provided in the back of one of the mold halves. This inlet communicates with a system of nozzles 21 arranged to feed plastic material into the mold cavities between the plates.

Program plates 22 and 23 are secured on the top surfaces of the mold halves, and shaped guide channels 24, 25 and 26 are formed in the upper surfaces of the program plates. Corresponding plates (not shown) are secured on the bottoms of the mold halves.

The assembly or stack 13 of mold plates includes a pair of slides 27 and 28 on opposite sides of a plurality of pairs of mold plates 29, 30 and 31, with the mold plates in each pair defining one or more mold cavities 32 therebetween. As seen best in figures 1, 2, 8 and 9, the upper end edge portions of the mold plates are formed as hangers 33. The bottom end edge portions are extended at 34 to form guide members, and roller bearings 35 are provided on both the hangers 33 and the guide extensions 34. When the mold is assembled, the roller bearings ride in the guide channels 24, 25 and 26, resulting in programmed opening and lcosing of the mold plates as the mold halves move toward and away from one another.

Plate bars 36 and 37 rest on top of the program plates and extend across the width of the assembled stack 13 of mold plates. The plate bars are trapezoidal in transverse cross-section, and the underside of the hanger extremities have correspondingly shaped notches 38 in which the plate bars are received. Thus, the mold plates are all held in alignment by the plate bars as the mold is operated. The trapezoidal cross-section enables easy removal and placement of the hangers on the plate bars.

The slides 27 and 28 have thickened midportions 39 defining oppositely sloping surfaces 40 and 41 having a taper corresponding to the taper of the surfaces 14 and 15 of the mold halves. The surfaces 40 and 41 have grooves 42 therein for receiving the tongues 16 on the mold halves. Thus, as the mold halves move away from each other, the slides are moved outwardly away from one another, making room for the mold plates to separate under the influence of the guide channels in the program plates.

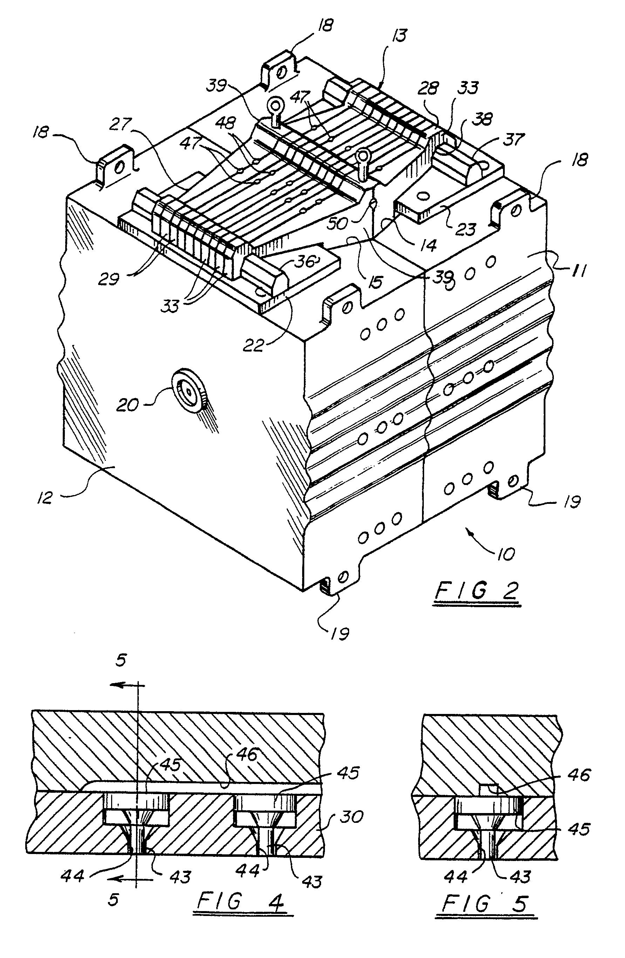

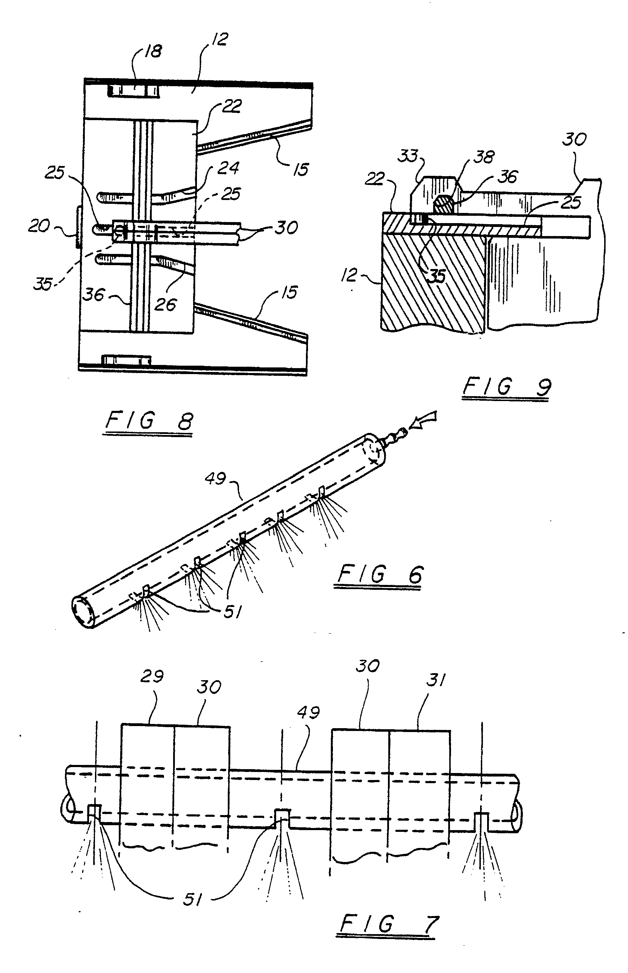

An ejector system for ejecting the molded parts is shown best in figures 4 and 5 and comprises a plurality of ejector pins 43 reciprocable in openings 44 in the mold plates and driven by pistons 45. Air channels 46 communicate with the pistons and during an injection cycle vacuum is applied to the pistons to keep them retracted. This vacuum also bleeds around the pistons and pins and serves to vacuum vent the mold cavities. When a molding cycle is completed, compressed air is applied to the channels to force the pistons forward, urging the pins into contact with the molded parts to eject them. Compressed air (or vacuum) is applied to the channels via air inlets 47 at the top of the mold plate stack as seen in figures 1 and 2. Pulsating ejection action can be achieved by alternating positive and negative pressure through venturis 48. In addition, each level of ejectors can be programmed individually as required for each part by controlling compressed air and vacuum through the venturis.

An air jet or air blast tube 49 is positioned in an opening 50 extending through the top portions of the mold stack and has a plurality of circumferentially extending slots 51 therein in positions to be located between the mold plates when they are separated, whereby a fan shaped discharge of air may be directed against the molded part to "slice" or lift the part away from the mold plate and accelerate its downward motion from the cavity. The tube 49 remains stationary while the mold plates open and close.

Adjustable air inlets 52 in the edges of the mold plates communicate with cooling and/or heating channels 53 in the backs of the mold plates to heat and/or cool the plates as desired. With this arrangement, selective heating or cooling of portions of the mold plates can be attained.

The arrangement of the stack mold of the invention permits all injection methods to be used. Thus, injection may be: direct, with surface runners; hot runner; insulated runner; and insulated with surface runner. The cooled base in the mold of the invention permits cooling cf surface runners.

The slides and mold halves are made of specially hardened steel, and wear plates are on all inside faces of the mold. The mold plates are made of special "Emerald" stainless steel prehardened to 32 RC to produce a mirror like surface ideal for thin part accuracy and finish.

The trapezoidal plate bars 36 and 37 are made of specially hardened steel and guide the mold plates in simultaneous motion along the top of the program plates, ensuring that no wear is exerted on the plates.

In use, molten material from the press nozzle is introduced through the opening 20 in the back of the mold and channeled to the "wall" created by the section of the mold plates. A series of channels or runners are engraved on either the section of the mold plates or on a "back plate" located within the injection half of the mold and which comes directly in contact with the mold plates when the mold closes. These runners channel the material to whatever opening or gates need to be located between the plates to convey the material to the parts to be produced. A variety of intermediate "relays" can be incorporated into the injection half of the mold to assist the molten material to be distributed in a thermally balanced manner to the different runners and gates. Such systems are presently used in conventional molds.

The program plates on the top and bottom of each mold half serve as wear plates for the plate bars in addition to acting as a program for the separation of the mold plates at the end of an injection cycle. The program plates also act as a support for the mold plates and prevent them from falling. In this connection, the eyebolts on the tops of the slides may be secured over the press tie bars to prevent dropping of the mold plate block in case the press opens beyond the plate hangers.

The unique arrangement of the mold plates parallel to the axis of movement of the mold halves enables a much greater number of mold plates to be used in a given size press for thereby molding a larger number of large, flat articles than can be molded in conventional presses wherein the mold plates are arranged perpendicular to the axis of movement. The shaped sides of the mold halves cooperate with complementally shaped surfaces on the mold plates to wedge the plates toward one another during closing movement of the press, and the guides on the mold plates and mold halves cause the mold plates to separate from one another or open during opening movement of the press.

While this invention has been illustrated and described in detail herein, it is to be understood that various changes in the structure may be made without departing from the scope of the invention as defined in the appended claims.

## Claims

1. A stack mold (10), comprising:
   a pair of mold halves (11,12) arranged to move toward and away from one another along an axis of movement between platens of a press;
   a plurality of mold plates (2,30,31) arranged in a stack (13) between the mold halves, said mold plates being disposed in planes substantially parallel to the axis of movement of said mold halves; and
   said mold plates and mold halves having shaped surfaces formed thereon such that a wedging action is exerted on the mold plates as the mold halves close toward one another, thereby pressing the mold plates together,
   said mold plates having hangers (33) formed integrally on upper extremities thereof for supporting and guiding the mold plates on the mold halves as the mold halves move toward and away from one another,
   characterized in that
   said mold halves (11,12) having guide means (24,25,26) formed thereon for cooperation with the hangers (33) on the mold plates to cause the mold plates (29,30,31) to separate from one another as the mold halves (11,12) move away from one another during opening movement of the press, and said mold plates being individually removable from the mold (10) without requiring disassembly of the mold halves (11,12).

2. A stack mold as claimed in claim 1, characterized in
   having ejector means associated with the mold plates (29,30,31) to eject molded articles from the mold plates at the end of an injection cycle,
   said ejector means comprising ejector pins (43) driven by piston (45) received in openings (44) in the mold plates (29,30,31), air passages (46) communicating with the pistons (45) for operating the ejector pins (43); and control means connected with the air passages for applying a negative pressure to the channels (46) and pistons (45) during an injection cycle to maintain the ejector pins (43) withdrawn and also to vent the mold cavity (32) and for applying a positive pressure to the pistons (45) to extend the ejector pins (43) at the end of an injection cycle.

3. A stack mold as claimed in claim 2, wherein:
an air blast tube (49) extends through the mold plates (13) in a direction substantially perpendicular thereto, said air blast tube (49) having a plurality of slots (51) therein in positions corresponding to the location of the mold cavity (32) when the mold plates (29,30,31) are separated at the end of an injection cycle to direct a fan shaped blast of air into the mold cavity and strip the molded part away from the mold plates (29,30,31) and accelerate its fall away from the mold cavity.

4. A stack mold as claimed in any of claims 1, 2 and 3, wherein:
said shaped surfaces comprise recessed faces on the opposing surfaces of the mold halves, said recessed faces having tapered sides (14,15) opening toward the opposite mold half (12,11), and
slides (27,28) are disposed between the mold plates and the tapered sides (14,15) of the mold halves (11,12), said slides having tapered outer faces corresponding to the tapered sides of the mold halves, defining a wedge shape which exerts a force against the mold plates urging them together as the mold halves close toward one another;
a tongue (16) and groove (42) structure being engaged between the tapered sides (14,15) of the mold halves (11,12) and the tapered faces of the slides, whereby as the mold halves move away from one another the slides are pulled away from the mold plates enabling them to separate from one another at the end of an injection cycle.

5. A stack mold as claimed in claim 4, wherein:
program plates (22,23) are supported on the top and bottom surfaces of the mold halves, said program plates having guide surfaces (24,25,26) formed thereon;
guide means being engaged between the hangers (33) formed integrally on the upper extremities of said mold plates (29,30,31) and the guide surfaces (24,25,26) of the program plates (22,23) to guide the mold plates in a predetermined opening and closing sequence as the mold halves move toward and away from one another.

6. A stack mold as claimed in claim 3, wherein:
heat exchange channels (53) are formed in the backs of the mold plates (29,30,31) for receiving and circulating a heat exchange fluid over the mold plates to heat and cool the plates; and control means associated with the channels for adjusting the flow of heat exchange fluid in the channels to regulate the amount of heating or cooling in selected portions of the mold plates.

## Revendications

1. Grappe (10), comprenant :
une paire de demi-moules (11, 12) disposés de manière à se déplacer l'un vers l'autre et en sens opposé l'un par rapport a l'autre le long d'un axe de déplacement entre les plateaux d'une presse ;
une pluralité de plaques de moule (29, 30, 31) disposées en une grappe (13) entre les demi-moules, lesdites plaques de moule étant disposées dans des plans sensiblement parallèles à l'axe de mouvement desdits demi-moules ;
lesdites plaques de moule et lesdits demi-moules comportant des surfaces usinées de sorte qu'une action de clavetage est exercée sur les plaques de moule alors que les demi-moules se ferment en se déplaçant l'un vers l'autre, ce qui serre de cette façon les plaques de moule ensemble, lesdites plaques de moule ayant des suspensions (33) formées de façon intégrante sur leurs extrémités supérieures pour supporter et guider les plaques de moule sur les demi-moules alors que les demi-moules se déplacent l'un vers l'autre et en sens opposé l'un à l'autre,
caractérisée en ce que
lesdits demi-moules (11, 12) comportent des moyens de guidage (24, 25, 26) pour coopérer avec les suspensions (33) sur les plaques de moule pour que les plaques de moule (29, 30, 31) se séparent l'une de l'autre alors que les demi-moules (11, 12) s'écartent l'un de l'autre pendant le mouvement d'ouverture de la presse, et lesdites plaques de moule peuvent être retirées individuellement du moule (10) sans que le démontage des demi-moules (11, 12) soit nécessaire.

2. Grappe telle que revendiquée dans la revendication 1,
caractérisée en ce que
sont prévus des moyens éjecteurs associés aux plaques de moule (29, 30, 31) pour éjecter des articles moulés des plaques de moule à la fin d'un cycle d'injection,
lesdits moyens éjecteurs comprennent des tiges d'éjection (43) actionnées par un piston

EP 0 248 790 B1
12

(45) reçu dans des ouvertures (44) dans les plaques de moule (29, 30, 31), des passages d'air (46) communiquant avec les pistons (45) pour actionner les tiges d'éjection (43) ;

et des moyens de commande reliés aux passages d'air pour appliquer une pression négative sur les canaux (46) et les pistons (45) pendant un cycle d'injection pour maintenir les tiges d'éjection (43) en retrait et également pour aérer le creux (32) du moule et pour appliquer une pression positive sur les pistons (45) pour faire s'avancer les tiges d'éjection (43) à la fin d'un cycle d'injection.

3. Grappe telle que revendiquée dans la revendication 2, dans laquelle :

un tube de soufflage d'air (49) s'étend à travers les plaques de moule (13) dans une direction sensiblement perpendiculaire à celles-ci, ledit tube de soufflage d'air (49) comportant une pluralité de fentes (51) dans des positions correspondant à l'emplacement du creux (32) du moule lorsque les plaques de moule (29, 30, 31) sont séparées à la fin d'un cycle d'injection pour diriger un jet d'air en forme d'éventail dans le creux du moule et démouler la pièce moulée des plaques de moule (29, 30, 31) et accélérer sa descente du creux du moule.

4. Grappe telle que revendiquée dans l'une quelconque des revendications 1, 2 et 3, dans laquelle :

lesdites surfaces usinées comprennent des faces évidées sur les surfaces opposées des demi-moules, lesdites faces évidées ayant des côtés coniques (14,15) s'ouvrant vers le demi-moule opposé (12, 11), et

des coulisses (27, 28) sont disposées entre les plaques de moule et les côtés coniques (14, 15) des demi-moules (11, 12), lesdites coulisses ayant des faces extérieures coniques correspondant aux côtés coniques des demi-moules, ce qui définit une forme de coin qui exerce une force contre les plaques de moule et les pousse ensemble alors que les demi-moules se ferment en se déplaçant l'un vers l'autre ;

une structure à languette (16) et rainure (12) étant engagée entre les côtés coniques (14, 15) des demi-moules (11, 12) et les faces coniques des coulisses, de sorte que, alors que les demi-moules s'écartent l'un de l'autre, les coulisses sont retirées des plaques de moule, ce qui permet à ces dernières de se séparer l'une de l'autre à la fin d'un cycle d'injection.

5. Grappe telle que revendiquée dans la revendication 4, dans laquelle :

des plaques de programme (22, 23) sont supportées sur les surfaces supérieures et inférieures des demi-moules, lesdites plaques de programme comportant des surfaces de guidage (24, 25, 26) ;

des moyens de guidage étant engagés entre les suspensions (33) formées de façon intégrante sur les extrémités supérieures desdites plaques de moule (29, 30, 31) et les surfaces de guidage (24, 25, 26) des plaques de programme (22, 23) pour guider les plaques de moule dans une séquence d'ouverture et de fermeture prédéterminée alors que les demi-moules se déplacent l'un vers l'autre et en sens opposé l'un à l'autre.

6. Grappe telle que revendiquée dans la revendication 3, dans laquelle :

des canaux échangeurs de chaleur (53) sont formés dans les faces arrière des plaques de moule (29, 30, 31) pour recevoir et faire circuler un fluide échangeur de chaleur sur les plaques de moule afin de chauffer et de refroidir les plaques ; et des moyens de commande associés aux canaux pour régler le débit du fluide échangeur de chaleur dans les canaux afin de régler la quantité de chaleur ou de refroidissement dans des portions sélectionnées des plaques de moule.


**Ansprüche**

1. Etagenform (10) umfassend:

ein Paar Formhälften (11,12) vorgesehen um sich zu einander hin und von einander ab gemäss einer Bewegungsachse zwischen Pressplatten zu bewegen;

eine Anzahl Formplatten (2,30,31) vorgesehen in einer Etage (13) zwischen den Formhälften, wobei die Formplatten in Ebenen im wesentlichen parallel zu der Bewegungsachse der genannten Formhälften angeordnet sind; und die Formplatten und Formhälften darauf derart geformte, Profiloberflächen aufweisen, dass eine Keilwirkung auf die Formplatten ausgeübt wird, wenn die Formhälften sich zu einander hin schliessen, wodurch die Formplatten zusammengedrückt werden, wobei die Formplatten Hängevorrichtungen (33) aufweisen die integral auf deren Oberenden gebildet sind um die Formplatten auf den Formhälften zu unterstützen und zu führen, wenn die Formhälften sich zu einander hin und von einander ab bewegen, dadurch gekennzeichnet, dass

die genannten Formhälften (11,12) Führungsvorrichtungen (24,25,26) aufweisen, die darauf für Zusammenwirkung mit den Hängevorrichtungen (33) auf den Formplatten gebildet sind um die Formplatten (20,30,31) sich voneinander trennen zu lassen, wenn die Formhälften (11,12) sich während der Oeffnungsbewegung der Presse von einander ab bewegen, und die genannten Formplatten einzeln aus der Form (10) entfernbar sind, ohne dass die Formhälften (11,12) auseinandergenommen zu werden brauchen.

2. Etagenform gemäss Anspruch 1,
dadurch gekenzeichnet, dass
sie zu den Formplatten (29,30,31) gehörende Auswerfvorrichtungen aufweisen um geformte Gegenstände von den Formplatten am Ende eines Einspritzzyklus auszuwerfen, wobei die genannten Auswerfvorrichtungen durch den Kolben (45) angetriebene Auswerfstifte (43) umfassen, wobei der Kolben in Oeffnungen (44) in den Formplatten (29,30,31) aufgenommen ist, wobei Luftdurchgänge (46) mit den Kolben (45) zur Betätigung der Auswerfstifte (43) in Verbindung stehen; und mit den Luftdurchgängen verbundene Steuervorrichtungen um einen negativen Druck an den Kanälen (46) und Kolben (45) während eines Einspritzzyklus vorzusehen um die Auswerfstifte (43) zurückgezogen zu halten und auch den Formhohlraum (32) zu entlüften und einen positiven Druck an den Kolben (45) vorzusehen um die Auswerfstifte (43) am Ende eines Einspritzzyklus auszuziehen.

3. Etagenform gemäss Anspruch 2,
dadurch gekennzeichnet, dass
ein Luftblasrohr (49) sich durch die Formplatten (13) in einer im wesentlichen dazu senkrechten Richtung erstreckt, wobei das Luftblasrohr (49) eine Anzahl Schlitze (51) darin in Stellungen aufweisen, die der Stelle des Formhohlraums (32) entsprechen, wenn die Formplatten (29,30,31) am Ende eines Injektionszyklus getrennt sind um einen fächerförmigen starren Luftstrom in den Formhohlraum zu richten und den geformten Teil von den Formplatten (29,30,31) abzustreifen und dessen Wegfallen aus dem Formhohlraum zu beschleunigen.

4. Etagenform gemäss einem der Ansprüche 1, 2 und 3,
dadurch gekennzeichnet, dass
die genannten Profiloberflächen ausgesparte Flächen auf den entgegengesetzen Oberflächen der Formhälften umfassen, wobei die genannten ausgesparten Flächen kegelförmige Seiten (14,15) aufweisen, die sich zu der gegenüberliegenden Formhälften hin (12,11) öffnen und Schieber (27,28) zwischen den Formplatten und den kegelförmigen Seiten (14,15) der Formhälften (11,12) vorgesehen sind, wobei die genannten Schieber kegelförmige Aussenflächen aufweisen, die den kegelförmigen Seiten der Formhälften entsprechen, wodurch eine Keilform geformt wird, die eine Kraft gegen die Formplatten ausübt, so dass diese zusammengedrückt werden, wenn die Formhälften sich zu einander hin schliessen;
wobei eine Zunge (16) und Nut (42) Konstruktion zwischen den kegelförmigen Seiten (14,15) der Formhälften (11,12) und den kegelförmigen Flächen der Schieber eingreifen, wodurch wenn die Formhälften sich von einander ab bewegen, die Schieber von den Formplatten weggezogen werden, wodurch sie am Ende eines Injektionszyklus voneinander getrennt werden können.

5. Etagenform gemäss Anspruch 4,
dadurch gekennzeichnet, dass
Programmplatten (22,23) auf den oberen und unteren Oberflächen der Formhälften unterstützt werden, wobei die Programmplatten darauf geformte Führungsoberflächen (24,25,26) aufweisen;
Führungsvorrichtungen zwischen den Hängevorrichtungen (33) greifen, die integral auf den Oberenden der genannten Formplatten (29,30,31) und der Führungsoberflächen (24,25,26) der Programmplatten (22,23) gebildet sind um die Formplatten in eine vorbestimmte Oeffnungs- und Schliessungsreihenfolge zu führen, wenn die Formhälften sich zu einander hin und von einander ab bewegen.

6. Etagenform gemäss Anspruch 3,
dadurch gekennzeichnet, dass
Wärmeaustauschkanäle (53) in den Rückseiten der Formplatten (29,30,31) zum Aufnehmen und Umlaufen eines Wärmeaustauschfluidums über die Formplatten zum Heizen und Kühlen der Platten gebildet sind; und zu den Kanälen gehörende Steuervorrichtungen zum Einstellen des Stromes des Wärmeaustauschfluidums in den Kanälen zur Regulierung der Heiz- oder Kühlungsmenge in ausgewählten Teilen der Formplatten.

_FIG 2_

_FIG 4_

_FIG 5_

_FIG 3_

FIG 8

FIG 9

FIG 6

FIG 7